(19) Europäisches Patentamt
European Patent Office
Office européen des brevets

(11) EP 1 879 974 B1

(12) **EUROPÄISCHE PATENTSCHRIFT**

(45) Veröffentlichungstag und Bekanntmachung des Hinweises auf die Patenterteilung:
**03.08.2011 Patentblatt 2011/31**

(21) Anmeldenummer: **06754945.1**

(22) Anmeldetag: **02.05.2006**

(51) Int Cl.:
***C09J 133/08*** *(2006.01)* ***C09J 133/10*** *(2006.01)*
***C09J 143/04*** *(2006.01)* ***C08F 220/12*** *(2006.01)*

(86) Internationale Anmeldenummer:
**PCT/EP2006/061959**

(87) Internationale Veröffentlichungsnummer:
**WO 2006/117362 (09.11.2006 Gazette 2006/45)**

(54) **VERWENDUNG SILICIUM ENTHALTENDER POLYMERISATE ALS BAUKLEBSTOFFE**

USE OF SILICON-CONTAINING POLYMERS AS STRUCTURAL ADHESIVES

UTILISATION DE POLYMERES CONTENANT DU SILICIUM COMME COLLES POUR LE BATIMENT

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **03.05.2005 DE 102005021017**

(43) Veröffentlichungstag der Anmeldung:
**23.01.2008 Patentblatt 2008/04**

(73) Patentinhaber: **BASF SE**
**67056 Ludwigshafen (DE)**

(72) Erfinder:
- **CENTNER, Alexander**
**67127 Rödersheim-Gronau (DE)**
- **ARISANDY, Christofer**
**68163 Mannheim (DE)**
- **FLICK, Dieter**
**67459 Böhl-iggelheim (DE)**
- **RUCKPAUL, Markus**
**69469 Weinheim (DE)**
- **SEIBERT, Horst**
**67136 Fussgönheim (DE)**

(56) Entgegenhaltungen:
**EP-A- 0 387 587 EP-A- 0 624 633**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft Klebstoffe enthaltend wenigstens ein Silicium enthaltendes Copolymer von $C_1$-$C_{20}$-Alkyl(meth)acrylaten und wenigstens einem ethylenisch ungesättigten Säureanhydrid oder einer ethylenisch ungesättigten Dicarbonsäure, deren Carbonsäuregruppen eine Anhydridgruppe bilden können, oder Gemischen davon oder wenigstens eines eine Isocyanatgruppe enthaltenden radikalisch copolymerisierbaren Monomers.

Weiterhin betrifft die vorliegende Erfindung die Herstellung dieses Klebstoffes sowie dessen Verwendung als Bauklebstoff, insbesondere als Parkettklebstoff oder Montagekleber.

Parkettklebstoffe dienen der Verklebung von Parkett mit dem Untergrund, wobei Parkett aus Holz bzw. Holz und Holzwerkstoffen besteht. Zum Kleben von Parkett werden im wesentlichen drei Klebstofftypen eingesetzt:

- Dispersionsklebstoffe
- Lösemittelklebstoffe
- Reaktionsharzklebstoffe

Die DIN281 "Parkettklebstoffe" beschreibt Anforderungen und Prüfkriterien für Dispersions-und Lösemittelklebstoffe.

Dispersionsklebstoffe bestehen aus in Wasser dispergierten organischen Bindemitteln, anorganischen Füllstoffen und notwendigen Additiven. Dispersionsklebstoffe binden durch Diffusion und Verdunstung des Wassers ab. Das Wasser aus diesen Klebstoffen bringt Parketthölzer/-elemente zum Quellen. Nachteilig ist eine Empfindlichkeit gegen mechanische Störungen in der Abbindephase.

Lösemittelklebstoffe bestehen aus gelösten organischen Bindemitteln, flüchtigen Lösemitteln, anorganischen Füllstoffen und Additiven. Sie binden durch Diffusion und Verdunstung des Lösemittels ab. Die Lösemittel bringen ähnlich wie Wasser aus Dispersionsklebstoffen Parketthölzer zum Quellen. Durch die Gefahrstoffverordnung und die TRGS 610 (BarbBI. Heft 5/1998) ist die Verwendung von stark lösemittelhaltigen Klebstoffen aus Arbeitsschutzgründen stark eingeschränkt.

Reaktionsharzklebstoffe bestehen aus chemisch reaktionsfähigen organischen Bindemitteln, anorganischen Füllstoffen sowie Additiven und sind im Regelfall wasser- und weitgehend lösemittelfrei.

Zu unterscheiden sind Ein-Komponenten- (1 K) und Zwei-Komponenten-Systeme (2K). 2K-Systeme binden durch chemische Reaktion der vermischten Komponenten unter kontinuierlicher Verfestigung ab. 1 K-Systeme binden in der Regel durch chemische Reaktion des Bindemittels mit der Umgebungsfeuchtigkeit ab. Reaktionsharzklebstoffe beinhalten normalerweise keine Bestandteile, die auf Parketthölzer quellend einwirken.

Montagekleber, auch Konstruktionsklebstoffe genannt, sind Zusammensetzungen, die sich aufgrund ihrer Eigenschaften zur vielfältigen Montage, vor allem in der Bau-industrie eignen. Aber auch zum Verkleben von Bauteilen wie z.B. im Fahrzeug-, Flugzeug-, Waggon-, Container- und Bootsbau bei der Herstellung von Möbeln oder in der Klima- und Lüftungstechnik werden Montageklebstoffe immer häufiger eingesetzt. Sie zeigen eine sehr hohe Anfangshaftung bei einer letztlich guten Belastbarkeit der Verklebung von Holz, Metall, Keramik, PVC und weiteren Kunststoffen im Innen- und Außenbereich, aber auch besondere Fähigkeiten bezüglich Spaltüberbrückung, Haftungsspektrum und Flexibilität.

Eine Anwendung von Montageklebern ist das schnelle und dauerhafte Befestigen von Gegenständen an Decken, Wänden und Böden. Häufig werden Montageklebstoffe auch für Reparaturarbeiten, sowie zur Fixierung bei der Teppich-, PVC-, Polyolefin-, Gummi-, Kork- oder Linoleumverlegung sowohl im Boden als auch im Wandbereich eingesetzt. In der Regel lassen sich die Montageklebstoffe aufgrund ihrer günstigen Eigenschaften auch als Dichtstoff einsetzen. Bei Montageklebern kommt es darauf an, einerseits Zähigkeit und Standfestigkeit und andererseits günstige Fließeigenschaften zu erreichen. Zudem muss die Klebmasse in der Lage sein, Materialunebenheiten zu überbrücken (Spaltüberbrückung), eine ausreichend offene Zeit gewährleisten und hohe Scherfestigkeiten erzielen.

Bei den Montageklebern werden vier Arten von Systemen unterschieden:

a) lösemittelhaltige Systeme
b) reaktive Systeme (Reaktionsharzklebstoffe)
c) Schmelzklebstoffe (Hotmelts)
d) wasserbasierte Systeme (Dispersionsklebstoffe)

Die Verwendung von stark lösemittelhaltigen Montageklebstoffen ist aus Gründen des bestmöglichen Arbeitsschutzes möglichst zu vermeiden. Lösemittelhaltige Kleber sind zudem besonders bei großflächigen Verklebungen im Innenbereich unbeliebt, da es häufig zu Geruchsbelästigungen durch freiwerdende Lösemitteldämpfe kommt. Die Vorteile liegen bei der Verwendung von lösemittelhaltigen Systemen darin, dass das vorhandene Lösemittel schnell aus der Klebmasse entweichen kann und so relativ schnell eine hohe Haftung für Montagearbeiten erzielt werden kann.

Hotmelts benötigen zur Verarbeitung entweder Spezialbedingungen/-geräte oder sie brauchen eine relativ lange Zeit, um genügende Haftungseigenschaften für Montagearbeiten zu entwickeln.

Wasserbasierte Systeme haben den Nachteil, das vorhandene Wasser nur langsam abzugeben. Der Aushärtungsvorgang der Klebmasse ist daher relativ langsam. Der große Vorteil der wasserbasierten Systeme liegt darin, dass keine Geruchsbelästigungen oder/und Gesundheitsgefährdungen durch freigesetzte Lösemittel auftreten.

Reaktive Systeme, wie das erfindungsgemäße haben den Vorteil, dass es sich um wasser- und lösungsmittelfreie Systeme handelt und so beispielsweise bei der Verwendung als Montageklebstoff keine ausgeprägte Schrumpfung erfolgt.

EP 387 587 beschreibt die Herstellung der o.g. Polymere und deren Verwendung als Dichtmassen.

EP 122 457 offenbart silanisierte Polyacrylate sowie deren Verwendung als Dichtmassen oder Haftklebstoffe.

EP 199 445 beschreibt silanisierte Polyacrylate und deren Verwendung z.B. in Dichtungsmassen.

WO 02/9249 offenbart ebenfalls silanisierte Copolymere sowie deren Verwendung als Dichtmassen.

WO 95/17443 beschreibt ebenso silanisierte Acrylat-Copolymere und deren Verwendung in Dichtungsmassen.

Keines der Dokumente des Standes der Technik offenbart jedoch die Verwendung Silicium enthaltender Polymerisate für Bauklebstoffe, insbesondere für Parkett- oder Montagekleber.

Aufgabe der vorliegenden Erfindung war die Entwicklung eines Klebstoffes, der sich durch einen raschen Festigkeitsaufbau sowie gute Scherfestigkeiten auszeichnet.

Die Aufgabe wurde erfindungsgemäß gelöst durch einen Klebstoff enthaltend

(A) ein Polyacrylatharz enthaltend wenigstens ein Silicium enthaltendes Copolymer von

a) 80-99.9 Gew.% $C_1$-$C_{20}$-Alkyl(meth)acrylaten (Monomere A) und
b) 0,1-20 Gew.% wenigstens eines ethylenisch ungesättigten Säureanhydrids oder einer ethylenisch ungesättigten Dicarbonsäure, deren Carbonsäuregruppen eine Anhydridgruppe bilden können (Monomere B) oder 0,1-10 Gew.% wenigstens eines wenigstens eine Isocyanatgruppe enthaltenden radikalisch copolymerisierbaren Monomers (Monomer C)
c) 0 bis 30 Gew.% eines oder mehrerer radikalisch copolymerisierbarer ethylenisch ungesättigter Monomere (Monomere D) und
d) wenigstens eines Silans der allgemeinen Formel I, II oder III

$$NHR_4\text{-}R_1\text{-}Si(R_2)_{3\text{-}m}(R_3)_m \quad (I)$$

$$SH\text{-}R_1\text{-}Si(R_2)_{3\text{-}m}(R_3)_m \quad (II)$$

$$R_5\text{-}R_1\text{-}Si(R_2)_{3\text{-}m}(R_3)_m \quad (III)$$

wobei

- m die Zahl 0, 1 oder 2 bedeutet,
- $R_1$ eine Kohlenwasserstoffkette mit bis zu 10 C-Atomen, die durch Sauerstoff oder Stickstoff unterbrochen sein kann bedeutet
- $R_2$ gleiche oder verschiedene hydrolysierbare Gruppen und $R_3$ gleiche oder verschiedene $C_1$-$C_5$-Alkylgruppen bedeuten
- $R_4$ einen Wasserstoffrest oder eine Kohlenwasserstoffkette mit bis zu 10 C-Atomen, die Sauerstoff oder Stickstoff enthalten kann bedeutet und
- $R_5$ einen Epoxidrest

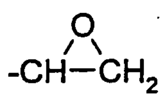

oder einen $R_5$ einen Epoxidrest order einen 3.4-Epoxycydohexylrest bedeutet, wobei man aus den Monomeren A) bis D) nach den an sich bekannten verfahren der Lösungspolymen-sation ein Ausgangspolymeres herstellt und in dessen Lösung oder Schimelze die Silane d) einrührt,

(B) Füllstoffe

(C) weitere übliche Hilfsstoffe

(D) sowie 0-60 Gew.% Weichmacher, dadurch gekennzeichnet, dass der gehalt des Polyacrylathaizes A) 30-70 gew.% beträgt.

Ein weiterer Gegenstand der Erfindung ist die Herstellung der erfindungsgemäßen Klebstoffe sowie deren Verwendung in Bauklebstoffen, insbesondere in Parkett oder Montageklebstoffen. Darüber hinaus können die offenbarten Klebstoffe als Schaums klebstoff/ -imprägnierung, Folienklebstoff, Knetmasse sowie als Bindemittel für Beschichtungen, Fliesenklebstoffe und für Trittschalldämmungen verwendet werden.

Die erfindungsgemäß verwendeten Copolymerisate zeichnen sich durch einen raschen Festigkeitsaufbau ohne die zwingende Anwesenheit eines Katalysators aus. Zudem ist bei Verwendung von Silanen mit R2 bzw. R3 = Ethoxy eine Abspaltung von Methanol vermeidbar.

Als Monomere A werden mit Vorteil Ester der Acrylsäure oder Methacrylsäure einpolymerisiert, die sich von 1 bis 10 C-Atomen enthaltenden Alkoholen wie Methanol, Ethanol, iso-Propanol, n- und iso-Butanol, n-Pentanol, n-Hexanol sowie 2-Ethylhexanol ableiten, wobei zu nennen sind z. B. Methylmethacrylat, Methylacrylat, n-Butylacrylat, Ethylacrylat, Laurylacrylat und 2-Ethylhexylacrylat, vorzugsweise Butylacrylat und Ethylhexylacrylat. Die Monomere können einzeln oder in Mischungen eingesetzt werden.

Die Monomere A werden in Mengen von 80-99,9 Gew.-% eingesetzt.

Die Monomere D sind Hilfsmonomere, die verwendet werden können, um eine bestimmte Härte der Polymerisate einzustellen. Als Monomere D können beispielsweise Acryl- oder Methacrylnitril, Acrylamid, Vinylester von $C_2$-$C_{12}$-n-Alkansäuren wie Vinylacetat und Vinylpropionat sowie vinylaromatische Monomere wie Styrol, Vinyltoluol, Chlorstyrol oder tert. Butylstyrol eingesetzt werden, wobei Acryl- und Methacrylnitril sowie Styrol bevorzugt sind. Außerdem können ethylenisch ungesättigte Carbonsäuren wie beispielsweise Acrylsäure, Methacrylsäure oder Itaconsäure verwendet werden.

Die Monomere D werden in Mengen von 0 bis 30 Gew.% eingesetzt.

Mit Vorteil werden die Gew.-Teile der Monomeren A, D mit Hilfe der Beziehung von Fox so gewählt, dass ein nur aus diesen Monomeren aufgebautes Polymerisat eine Glastemperatur von -70 bis +15, bevorzugt von -50 bis -10°C aufweisen würde. Nach Fox (T.G. Fox, Bull. Am. Phys. Soc. [Ser. II], 1, 123 [1956]) gilt für die Glastemperatur von Mischpolymerisaten in guter Näherung

$$1/T_g = x^1/T_g^1 + x^2/T_g^2 + \dots x^n/T_g^n$$

wobei $x^1, x^2, \dots, x^n$ die Massenbrüche der Monomeren 1,2,...,n und $T_g^1, T_g^2, \dots, T_g^n$ die Glastemperaturen der jeweils nur aus einem der Monomeren 1,2,... oder n aufgebauten Polymeren in Grad Kelvin bedeuten.

Die Glastemperaturen dieser Homopolymerisate der Monomeren A und D sind bekannt und z.B. in J. Brandrup, E. H. Immergut, Polymer Handbook 1st Ed. J. Wiley, New York, 1966 und 2nd Ed. J. Wiley, New York, 1975 aufgeführt.

Als Monomere B, die gegenüber den Monomeren C bevorzugt sind, werden mit Vorteil cyclische Anhydride zweibasischer Säuren, wie Maleinsäureanhydrid, Itakonsäureanhydrid oder Citraconsäureanhydrid eingesetzt, besonders bevorzugt wird Maleinsäureanhydrid eingesetzt. Die Monomere B werden in Mengen von 0,1-20 Gew.-%, vorzugsweise 0,5-15 Gew.-%, insbesonders bevorzugt von 1-10 Gew.-% eingesetzt.

Als Monomere C kommen beispielsweise ω-Isocyanatoalkylacrylate und -methacrylate der allgemeinen Formel II

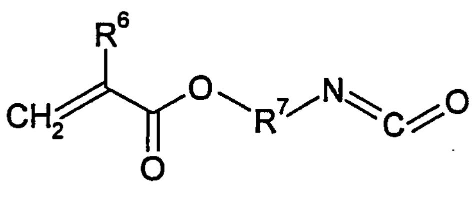

(II)

in der die Variablen die folgende Bedeutung haben:

$R^6$ Wasserstoff oder Methyl

$R^7$ Kohlenwasserstoffkette mit bis zu 12 C-Atomen, die einfach oder mehrfach durch Sauerstoff unterbrochen sein

kann,

in Betracht, die u.a. in der DE-A 35 23 692 beschrieben sind. Weitere mögliche Monomere C sind N-(1-alkenyl)isocyanate mit 2 bis 4 Kohlenstoffatomen in der Alkenylgruppe, sowie das 1-(4-Isoprenyl-phenyl)-1-methyl-ethylisocyanat und das Addukt aus Bis [isocyanat]carbodiimid und Acrylsäure. Die beiden letzteren Monomeren sind u.a. in "Methoden der organischen Chemie (Houben-Weyl)", E20, S. 1573 bis 1575 Georg Thieme Verlag, Stuttgart (1987) beschrieben. Bevorzugte Monomere C sind das Vinylisocyanat, der 2-Methyl-acrylsäure-(2-isocyanat-ethylester), der 2-Methyl-acrylsäure-(5-isocyanat-3-oxa-pentylester) sowie der Acrylsäure-(1,2-dimethyl-3-isocyanat-propylester).

Halogene, die Aminogruppe oder wenige C-Atome tragende Alkyloxy, Alkylthio-, Alkylamino- oder Dialkylaminogruppen zählen zu den bevorzugten hydrolysierbaren Gruppen $R_2$. Unter den Alkylgruppen versteht man 1 bis 5 C-Atome enthaltende Alkylreste, beispielsweise den Methyl-, Ethyl-, Propyl-, n-Butyl-, i-Butyl oder Pentylrest.

Eine Kohlenwasserstoffkette mit bis zu 12 C-Atomen, die einfach oder mehrfach durch Sauerstoff unterbrochen sein kann, kann eine Ethyl-, Propyl-, Butyl-, t-Butyl-, Pentyl-, Hexyl-, Octyl-, Nonyl-, Decyl-, Dodecyl- oder Undecylkette bedeuten.

Eine Kohlenwasserstoffkette mit bis zu 10 C-Atomen, die Stickstoff oder Sauerstoff enthalten kann, kann für $R_4$ einen Methyl-, Ethyl-, Propyl- oder n- oder t-Butylrest bedeuten; für $R_4$ auch einen Aminoalkyl, einen Maleinsäuredialkylesterrest, eine Cyclohexyl- oder Phenylrest bedeuten und für $R_1$ einen Propyl, 2,2-Dimethylbutylsowie für die Gruppe der $\alpha$-Silane einen $CH_2$-Rest bedeuten.

Bevorzugt eingesetzte Silane I sind 3-Aminopropyl-trimethoxysilan, 3-Aminopropyltriethoxysilan, N-(2-Aminoethyl-3-Aminopropyl)-trimethoxysilan, 3-Aminopropylmethyldiethoxysilan, 4-Amino-3,3-dimethylbutyltrimethoxysilan, N-(n-Butyl)-3-Aminopropyltrimethoxysilan, 1-Butanamin-4-(dimethoxymethylsilyl)-2,2-dimethyl, (N-Cyclohexyl-aminomethyl)triethoxysilan, (N-Cyclohexylaminomethyl)methyldiethoxysilan, (N-Phenylaminoethyl)trimethoxysilan, (N-Phenylaminomethyl)methyldimethoxysilan, $\gamma$-Ureidopropyltrialkoxysilan.

Mercaptosilane der allgemeinen Formel II sind beispielsweise 3-Mercaptopropyltrimethoxysilan, 3-Mercaptopropylmethyldimethoxysilan oder 3-Mercaptopropyltriethoxysilan. Unter den Epoxysilanen der allgemeinen Formel III versteht man beispielsweise 3-Glycidyloxypropyltrimethoxysilan, 3-Glycidyloxypropyltriethoxysilan oder beta-(3,4-Epoxycyclohexyl)ethyltrimethoxysilan.

Der Gehalt der erfindungsgemäßen Polymerisate an Silanen I, II oder III ist abhängig vom Gehalt an Monomeren B oder C. So beläuft sich der Gehalt an Silanen auf solche Mengen, dass der Quotient Q, gebildet aus der Molzahl der eingebauten Silane als Zähler und der Molzahl der eingebauten Monomeren B oder der in Form der Monomeren C eingebauten Isocyanatgruppen als Nenner 0,1 bis 1, bevorzugt 0,5 bis 1 besonders bevorzugt 0,8 bis 1 beträgt.

Die erfindungsgemäßen Polymerisate eignen sich hervorragend als Basis für Klebstoffe, insbesondere für Bauklebstoffe wie Parkettklebstoffe und Montagekleber.

Die Herstellung der erfindungsgemäßen Polymerisate erfolgt zweckmäßigerweise so, dass man aus den Monomeren A bis D nach dem an sich bekannten Verfahren der radikalischen Lösungspolymerisation ein Ausgangspolymeres herstellt und in dessen Lösung oder Schmelze die Silane I üblicherweise innerhalb weniger Minuten einrührt, wobei die Temperatur von untergeordrieter Bedeutung ist und 25 bis 120° betragen kann. Als Lösungsmittel für die radikalische Lösungspolymerisation werden in der Regel Ether wie Tetrahydrofuran oder Dioxan, Ester wie Ethylacetat oder n-Butylacetat, Ketone wie Aceton und Cyclohexanon, Methylethylketon (MEK), N,N-Dialkylcarbonsäureamide wie N,N-Dimethylformamid, N,N-Dimethylacetamid oder N-Methyl-2-pyrrolidon, Aromaten wie Toluol und Xylol, aliphatische Kohlenwasserstoffe wie Isooctan, chlorierte Kohlenwasserstoffe wie tert.-Butylchlorid oder Weichmacher wie Di-n-butylphthalat verwendet.

Als Radikalstarter kommen insbesondere organische Azoverbindungen oder organische Peroxide wie Azobis-(isobutyronitril), Dibenzoylperoxid, t.-Butyl-perpivalat, t.-Butyl-peroctoat, t- Butyl-perneodecanoat, t-Butyl-perisononanoat, t-Amyl-perpivalat sowie t-Butylperbenzoat in Betracht.

Als weitere Hilfsmittel können Wasserfänger, Katalysatoren oder kettenübertragende Substanzen wie aliphatische, aromatische oder alicyclische Mercaptane, z.B. n-Butylmercaptan oder n-Laurylmercaptan, t.-Dodecylmercapatan oder Thioglycolsäurealkylester wie Thioglycolsäureethlyester oder Terpinolene zugesetzt werden. Besonders bevorzugte Molekulargewichstregler sind t.-Dodecylmercaptan, Terpinolen oder Mercaptoalkoxysilane.

Die Polymerisationstemperatur beträgt in vorteilhafter Weise 70 bis 160 °C. Üblicherweise wird die Polymerisation in Form eines Zulaufverfahrens durchgeführt, bei dem man einen Teil des Polymerisationsansatzes vorlegt, auf die Polymerisations-temperatur erhitzt und anschließend unter Aufrechthaltung der Polymerisationstemperatur den Rest des Polymerisationsansatzes in getrennten Zuläufen, von denen einer die Monomeren enthält, kontinuierlich zuführt. Das Zulaufverfahren erstreckt sich in der Regel über einen Zeitraum von 2 bis 24 h. Abschließend wird üblicherweise noch 1 bis 2 h nachpolymerisiert. Zweckmäßigerweise arbeitet man in "wasserfreiem" Polymerisationsmedium, d.h. bei einem Wassergehalt von weniger als 100 ppm. Mit Vorteil wird die Lösungspolymerisation der an sich wasserfreien Reaktionsteilnehmer in Gegenwart geringer Mengen an Trocknungsmitteln wie Tetraalkoxysilanen, z.B. Tetramethoxysilan, oder Orthoameisensäuretrialkylestern, z.B. Triethylorthoformiat, gegebenenfalls unter Zusatz einer Lewis Säure,

durchgeführt. Von den so erhältlichen Lösungen der Ausgangspolymeren kann das Lösungsmittel je nach Bedarf, beispielsweise durch Destillation im Vakuum, teilweise oder vollständig abgetrennt werden.

Der K-Wert der dabei anfallenden Ausgangspolymeren in Tetrahydrofuran (THF) beträgt vorzugsweise 1 bis 100, besonders bevorzugt 1 bis 30, insbesonders bevorzugt 5 bis 20. Der K-Wert ist eine relative Viskositätszahl, die in Analogie zur DIN 53726 bei 25°C bestimmt wird. Er enthält die Fließgeschwindigkeit einer Mischung aus 0,01 g Polymer pro mol THF, relativ zur Fließgeschwindigkeit von reinem THF und charakterisiert den mittleren Polymerisationsgrad des Polymeren.

Durch Einrühren der Silane I, II oder III in Schmelzen oder Lösungen der Ausgangspolymeren sind die erfindungsgemäßen Polymerisate in Substanz oder in Lösung erhältlich, wobei die Umsetzung mit den Silanen I oder II im allgemeinen bereits bei Raumtemperatur erfolgt, während bei der Umsetzung der Silane III Temperaturen grösser 100°C erforderlich sind.

Bei der Herstellung der erfindungsgemäßen Klebstoffe können als Hilfsmittel u.a. äußere Weichmacher, inerte Füllstoffe, oberflächenmodifizierte Füllstoffe, Pigmentverteiler, Rheologieadditive, Thixotropierungsmittel, Verdickungsmittel, Haftvermittler, Wasserfänger, Farbstoffe, Lösungsmittel, Brandschutzadditive, Mittel zur Erhöhung der Alterungsbeständigkeit oder Wirkstoffe, die die Aushärtung durch Einwirkung von Luftfeuchtigkeit beschleunigen, zugegeben werden.

Die Mengen an Zusätzstoffen sind der Fachmann geläufig und werden in Abhängigkeit von den gewünschten Eigenschaften des Klebstoffes ausgewählt und zweckmäßigerweise in die Lösungen oder Schmelzen der erfindungsgemäßen Polymerisate oder direkt in die Polymerisate eingerührt. Bezogen auf das Gesamtgewicht der Zubereitung beträgt der Anteil der erfindungsgemäßen Silicium enthaltenden Polymerisate 30 bis 70 Gew.-%.

Geeignete Füllstoffe bzw. Pigmente sind beispielsweise in "Pigment- und Füllstoff-Tabellen", Lückert, (2002) Vincentz Verlag aufgeführt.

Als inerte Füllstoffe kommen insbesondere Aluminiumsilicate, Quarz, gefällte oder pyrogene Kieselsäure, die hydrophobiert sein kann, Leicht- und Schwerspat, Talcum, Dolomit, Calciumcarbonat sowie farbgebende Pigmente wie Titanweiß, Bleiweiß, Chromgelb, Mennige, Zinkgelb oder Ruß in Betracht sowie Calciumsilikat, Bariumsulfat, Magnesiumcarbonat und Magnesiumsilikat. Einige der Füllstoffe haben vorteilhaft einen zusätzlich verstärkenden Effekt durch den z.B. die Kohäsion der Klebstoffe erhöht werden kann.

Als weitere anorganische Füllstoffpartikel eignen sich beispielsweise Füllstoffpartikel aus Andalusit, Silimanit, Kyanit, Mullit, Pyrophylit, Omogolit oder Allophan. Weiterhin geeignet sind Verbindungen auf der Basis von Natriumaluminaten, Silikate, wie z.B. Aluminiumsilikate, Calciumsilikate oder Kieselsäuren (z.B. Aerosil®). Ebenfalls geeignet sind Mineralien wie Kieselerde, Calciumsulfat (Gips), das nicht aus Rauchgasentschwefelungsanlagen stammt in Form von Anhydrit, Halbhydrat oder Dihydrat, Quarzmehl, Kieselgel, gefälltes oder natürliches Bariumsulfat, Titandioxid, Zeolithe, Leucit, Kalifeldspat, Biotit, die Gruppe der Soro-, Cyclo-, Ino-, Phyllo- und Tectosilikate, die Gruppe der schwer Löslichen Sulfate, wie Gips, Anhydrit oder Schwerspat, sowie Calciummineralien, wie Calcit.

Die genannten anorganischen Materialien können einzeln aber auch im Gemisch eingesetzt werden. Weitere geeignete Materialien sind gefälltes oder natürliches Kaolin, Talkum, Magnesium- oder Aluminiumhydroxid (zur Einstellung der Brandklasse), Blähgraphit, Schichtsilikate, Zinkoxid sowie Zirkoniumsalze. Mittels Zugabe von Leichtfüllstoffen - keramischen Mikrohohlkugeln , Glashohlkugeln, Schaumglaskugeln, expandiertes bzw. nicht expandiertes Polystyrol oder sonstigen Leichtfüllstoffen, wie sie z.B. von der Fa. Omega-Minerals hergestellt werden, lassen sich Parameter wie Dimensionsstabilität und Dichte beeinflussen.

Die Füllstoffpartikel weisen einen x50-Wert für die durchschnittliche Teilchengrößenverteilung von etwa 1 bis 120 $\mu$m, beispielsweise etwa 3 bis 60 oder etwa 60 bis 90 $\mu$m auf, gemessen mit Sympatec® Helos H 0720 in Isopropanol.

Ebenfalls zum Einsatz geeignet sind organische Füllstoffpartikel. Hierzu zählen insbesondere feinvermahlene Kunstoffmehle, wie sie beim Recycling von Kunststoffen anfallen können und Kunststoffmehle, wie sie aus der Feinvermahlung von hochvernetzten elastomeren oder duromeren Polymeren erhältlich sind. Ein Beispiel hierfür ist Gummimehl, wie es beispielsweise durch Feinvermahlung von Autoreifen entsteht. Weitere Füllstoffpartikel sind Kunststofffasern, Schlagzähmodifikatoren, Cellulosefasern, Glasfasern (z.B. Wollastonit® Marken)

Die Pigmente dienen dazu, den Klebstoff, bzw. Montageklebstoff einzufärben. Bevorzugt sind organische Pigmente und Eisenoxide. Beispiele sind die Luconyl®-Typen der Fa. BASF. Die Pigmente werden in Mengen von 0 bis 5 Gew.-%, bevorzugt 0,5 bis 2 Gew.-% eingesetzt.

Als Weichmacher kommen generell alle Typen infrage die mit dem Polymeren kompatibel sind z.B. Adipate, Phtalate, Sebacate, Phosphorsäureester, Dicarboxylate, Citrate, chlorierte bzw. nicht-chlorierte Kohlenwasserstoff Weichmacher oder Weichharze.

Als Weichmacher werden beispielsweise in einer Menge von 0 bis 60 Gew.-%. Propylenglykolalkylphenylether, Ethylenglykolphenylether, Polyisobutylene, Phthalsäureester und/oder Sulfonsäureester, Benzolsulfonamid, Harzschmelzen (mit natürlichen und synthetische Harze) mit Pluriolen oder Weichmachern, Phosphatester, Di-2-ethylhexylsebacate (DOS) und Di-2-ethylhexylazelate (DOZ), Diisodecylsebacate (DIDS), Tris-2-ethylhexyltrimellitate (Trioctyltrimellitate - TOTM), L79TM (ein Ester von gemischten halb-linearen $C_7$- und $C_9$- Alkoholen) und L810TM, ein Ester von

gemischten C8 und C10 linearen Alkoholen, oder epoxidiertes Sojabohnenöl (ESBO) sowie epoxidiertes Leinsamenöl (ELO) eingesetzt. Bevorzugt wird jedoch auf die Verwendung von Weichmachern verzichtet.

Weiterhin können Fettalkohole oder deren Derivate eingesetzt werden, insbesondere Triglyceride von höheren Fettsäuren und vorzugsweise natürliche Fette und Öle.

Als weitere Weichmacher eingesetzt werden können Phthalate (Palatinol Typen), Adipate (Plastomoll® Typen), Dicarboxylate (z.B. Hexamoll® DINCH), Citrate oder Weichharze (z.B. acResin® DS 3500, Acronal® 4 F).

Zu den weiteren Hiffsstoffen gehören beispielsweise, Lösungsmittel zur Beeinflussung der offenen Zeit und der mechanischen Eigenschaften, z.B. Butylglykol. Als Tackifier können kolophonium- oder kohlenwasserstoffbasierte Harze eingesetzt werden. Weitere Hilfsstoffe können sein, Vernetzer, Haftvermittler, Pigmentverteiler, Antiabsetzmittel, Stabilisatoren. Als Haftvermittler können z.B. Silane wie Vinyltimethoxysilan, Glycidoxypropyltrimethoxysilan, Aminopropyltriethoxysilan, Bis(trialkoxysilylpropyl)amin verwendet werden.

Die Haftung auf gewissen Substraten lässt sich durch die Verwendung von Primern weiter verbessern.

Weitere übliche Hilfsstoffe sind Rheologieadditive. Eine Übersicht findet sich in "Lackrohstoff-Tabellen", Karsten, 10. Auflage, Vincentz Verlag, Seite 856 ff. Dazu zählen anorganische und organische Verdickungs- bzw. Thixotropiermittel wie beispielsweise aber nicht abschließend Kaoline, Schichtsilikate wie Smektite, Bentonite, Hektorite (z.B. Bentone® 27, Fa. Elementis), modifizierte Alkydharze (Borchi® Set 134, Fa. Borchers), modifizierte Harnstoffe (Byk® 410, Byk Chemie), Polyamidwachse (Crayvallac® SLX, Crayvallac® Super, Fa. Cray Valley, Disparlon® 6100 , C.H. Erbslöh), Pflanzenölderivate (Polytix® R100, Fa. CF), modifizierte Rizinusölderivate (Thixatrol® ST, Fa. Elementis, Flowtone® ST, Fa. Cray Valley), Fettsäureamide (Lutovix® HP, Lehmann & Voss) sowie Faserfüllstoffe (z.B. Polyethylenfasern wie Stewathix® 100/200/500/600, Fa. STW). Weithin kommen gefällte oder pyrogene Kieselsäuren, die hydrophobiert sein können, als Rheologieadditive (z.B. Aerosil® 300, Fa. Degussa bzw. hydrophobierte Typen z.B. Aerosil® R 106 , Fa. Degussa) in Betracht. Als Verdicker können außerdem Cellulosen (Ethylcellulose, Fa. Herkules) und deren Derivate sowie natürliche Verdicker, wie z.B. Bentonite, Alginate oder Stärke eingesetzt werden.

Die erfindungsgemäßen Polymerisate und Formulierungen sind durch eine bereits bei Zimmertemperatur unter Einwirkung von Luftfeuchtigkeit rasch fortschreitende Aushärtung charakterisiert, die je nach Bedarf durch Zugabe entsprechender Katalysatoren zusätzlich beschleunigt werden kann.

Geeignet Katalysatoren sind in "Lackrohstoff-Tabellen", Karsten, 10. Auflage, Vincentz Verlag, Seite 797 ff aufgeführt.

Als Katalysatoren können beispielsweise verwendet werden: organische oder anorganische Säuren, z.B. p-Toluolsulfonsäure, Phosphorsäure sowie deren Mono- und Diester, Salze organischer Säuren z.B. Zinnnaphthenat, Zinnoctoat, Zinnbutyrat, Eisenstearat Tetra-n-butyl-titanat, Di-n-butyl-zinn-di-n-dodecanat oder Di-n-butyl-zinn-di-acetat, Di-n-butyl-zinn-dilaurat oder organische Amine wie Isophoron, Imidazole etc. Bevorzugte Kondensations-Katalysatoren sind Organozinn Salze wie Dibutylzinndilaurat und Dibutylzinn-diacetat oder organische Wismutverbindungen. Die erfindungsgemässen Zubereitungen können 0-5 Gew.-% bevorzugt 0-2 Gew.-%, besonders bevorzugt 0-1 % dieser Wirkstoffe enthalten.

Die Klebstoffe können in Form eines Einkomponentensystems hergestellt werden, bei dem alle Bestandteile vermischt und anschließend in einem abgedichteten Behälter gelagert werden. Man kann sie aber auch in Form eines Zweikomponentensystems verwenden, bei dem das Ausgangspolymere und die Hilfsmittel zu einer Komponente vermischt werden, in die vor Anwendung die Silane I als zweite Komponente eingerührt werden. Im Falle eines Einkomponentensystems muss besonders sorgfältig auf den Ausschluss von Wasser geachtet werden, da sonst ein vorzeitiges Aushärten der Klebstoffe erfolgt. Im Falle eines Zweikomponentensystems ist die Anwesenheit geringer Spuren Wasser im Ausgangspolymeren oder in den Hilfsmitteln weniger kritisch, was sowohl die Verarbeitung der Ausgangskomponenten als auch die Lagerung des Klebstoffes erleichtert.

Die nachfolgenden Beispiele sollen die Erfindung näher erläutern, ohne sie jedoch darauf zu beschränken.

Beispiele B1 bis B16 sowie B18

Die Beispiele B1-B6, B8-B12, B14 sind Rederenzbeispiele (nicht erfindungs-gemäβ, Beispiel B17 ist ein Vergleichsbeispeil. Verschiedene Silicium enthaltende Polymerisate, die hauptsächlich aus Acrylsäure- und/oder Methacrylsäureestern aufgebaut sind

B1

Eine Lösung aus 300 g Toluol, 1 g Triethylorthoformiat und 50 g (510 mmol) Maleinsäureanhydrid wurde auf die Polymerisationstemperatur von 110°C erhitzt und anschließend unter Aufrechterhaltung der Polymerisationstemperatur im Laufe von 2,5 h mit 550 g n-Butylacrylat und parallel dazu im Laufe von 3,5 h mit einer Lösung von 2 g Azobis-(isobutyronitril) in 100g Toluol versetzt. Danach wurde noch 2 h bei 110°C nachpolymerisiert. Der K-Wert (in THF) des in Lösung erhaltenen Ausgangspolymeren betrug 32. In die erhaltene Lösung des Ausgangspolymeren wurden bei

Zimmertemperatur innerhalb von 5 min 12 g (67 mmol) 3-Aminopropyl-trimethoxysilan eingerührt. Von der erhaltenen Flüssigkeit wurde eine Probe in 2 mm Schichtdicke auf eine Glasplatte aufgetragen und Normalklima (23°C, 50 % r.F.) ausgesetzt. Nach 24 h zeigte der gebildete Film kein Fließverhalten mehr.

B2

Wie B1, nur wurden an Stelle der 50 g Maleinsäureanhydrid 12 g (60 mmol) 2-Methyl-acrylsäure-(5-isocyanat-3-oxa-pentylester) einpolymerisiert. Der K-Wert (in THF) der Ausgangspolymeren betrug 36,5. Nach 70 h zeigte der gebildete Film kein Fließverhalten mehr.

B3

Eine Lösung aus 300 g Toluol und 2 g Triethylorthoformiat wurde auf die Polymerisationstemperatur von 80°C erhitzt und anschließend innerhalb von 3 h mit einer Monomerenmischung aus 500 g n-Butylacrylat, 90 g Acrylnitril und 10 g (65 mmol) 2-Methyl-acrylsäure-(2-isocyanat-ethylester) und parallel dazu im Laufe von 3,5 h mit einer Lösung von 2 g Azo-bis-(isobutyronitril) in 100 g Toluol versetzt. Danach wurde noch 1,5 h bei 110°C nachpolymerisiert und anschließend 150 g Lösungsmittel im Vakuum abdestilliert. Dann wurden bei Zimmertemperatur in die ein Ausgangspolymerisat mit einem K-Wert (in THF) von 42,0 enthaltende Lösung 11,6 g (65 mmol) 3-Aminopropyl-trimethoxysilan eingerührt und eine Probe der erhaltenen Zubereitung in 2 mm Schichtdicke auf eine Glasplatte aufgetragen und 3 Wochen lang Normalklima ausgesetzt. Es wurde ein transparenter elastischer Film mit einer Reißfestigkeit von 0,37 $N/mm^2$ und einer Reißdehnung (beide nach DIN 53 504 bei einer Vorschubgeschwindigkeit von 100 mm/min und unter Verwendung des Probekörpers S3A) von 677 % erhalten.

B4

Wie B3, jedoch mit folgenden Unterschieden: Die Polymerisationstemperatur betrug 80°C, die Zusammensetzung der Monomerenrnischung war 540 g Ethylacrylat, 50 g Acrylnitril und 10 g (65 mmol) 2-Methylacrylsäure-(2-isocyanat-ethylester), die Zufuhr der Monomerenmischung erfolgte innerhalb von 1 h 45 min, die Initiatorlösung enthielt 3 g Azo-bis-(isobutyronitril) und wurde parallel zur Monomerenrnischung innerhalb von 2 h 30 min zugeführt, die Nachpolymerisation erfolgte bei 90°C, die abdestillierte Menge Lösungsmittel betrug 100 g, der K-Wert des Ausgangspolymeren (in THF) war 45,9 g, als Silan I wurden 14,3 g (65mmol) 3-Aminopropyl-triethoxysilan zugegeben, die Reißfestigkeit betrug 1,3 $N/mm^2$ und die Reißdehnung lag bei 146%.

B5

Wie B3, jedoch mit folgenden Unterschieden: Die Polymerisationstemperatur betrug 105° C, die Zusammensetzung der Monomerenmischung war 490 g Ethylacrylat, 100 g n-Butylmethacrylat und 12 g (77 mmol) 2-Methylacrylsäure-(2-isocyanat-ethylester), die Zufuhr der Monomerenmischung erfolgte innerhalb von 2 h, die Initiatorlösung enthielt 3 g Azo-bis-(isobutyronitril) und wurde parallel zur Monomerenmischung innerhalb von 2 h 15 min zugeführt, die Nachpolymerisation dauerte 2 h, die abdestillierte Menge Lösungsmittel betrug 100 g. der K-Wert des Ausgangspolymeren (in THF) war 36,4 g, als Silan I wurden 14,3 g (64 mmol) N-(2-Aminoethy)-3-amino-propyl)-trimethoxysilan zugegeben, die Reißfestigkeit betrug 0,36 $N/mm^2$ und die Reißdehnung lag bei 345%.

B6

Wie B3, jedoch mit folgenden Unterschieden: Die Polymerisationstemperatur betrug 100°C, die Zusammensetzung der Monomerenmischung war 500 g n-Butylacrylat, 90 g Ethylacrylat und 15 g (75 mmol) 2-Methyl-acrylsäure-(5-isocyanat-3-oxa-pentylester), die Monomerenmischung enthielt zusätzlich 2 g Thioglycolsäureethylester, die Zufuhr der Monomerenmischung erfolgte innerhalb von 2,5 h, die Initiatorlösung enthielt 4 g Azo-bis-(isobutyronitril) und wurde parallel zur Monomerenmischung innerhalb von 3 h zugeführt, die Nachpolymerisation dauerte 1 h, das Lösungsmittel wurde vollständig abdestilliert, der K-Wert des Ausgangspolymeren (in THF) betrug 21,4, die zugegebene Menge 3-Aminopropyl-trimethoxysilan betrug 12 g (67 mmol) und wurde gemeinsam mit 2 g Di-n-butyl-zinn-di-n-dodecanat zugegeben, die Reißfestigkeit betrug 0,2 $N/mm^2$ und die Reißdehnung lag bei 98%.

B7

Wie B3, jedoch mit folgenden Unterschieden: Die Polymerisationstemperatur betrug 100°C, die Zusammensetzung der Monomerenmischung war 590 g Ethylacrylat und 10 g (50 mmol) 2-Methylacrylsäure-(5-isocyanat-3-oxa-pentylester), die Zufuhr der Monomerenmischung erfolgte innerhalb von 2 h, die Initiatorlösung enthielt 4 g Azo-bis-(isobutyronitril) und wurde parallel zur Monomerenmischung innerhalb von 2 h 30 min zugeführt, die Nachpolymerisation dauerte 1 h, die abdestillierte Menge Lösungsmittel betrug 200 g, der K-Wert des Ausgangspolymeren (in THF) war 26,1, die zugegebene Menge 3-Aminopropyl-trimethoxysilan betrug 9 g (50 mmol) und wurde gemeinsam mit 30 g hydrophobierter pyrogener Kieselsäure sowie 2 g Di-n-butyl-zinn-di-n-dodecanat zugegeben, die Reißfestigkeit betrug 0,8 N/mm$^2$ und die Reißdehnung lag bei 110%.

B8

Wie B3, jedoch mit folgenden Unterschieden: Die Polymerisationstemperatur betrug 100°C, die Zusammensetzung der Monomerenmischung war 490 g Ethylacrylat, 100 g Acrylnitril und 10 g (50 mmol) 2-Methyl-acrylsäure-(5-isocyanat-3-oxa-pentylester), die Zufuhr der Monomerenmischung erfolgte innerhalb von 2 h, die Initiatorlösung enthielt 4 g Azo-bis-(isobutyronitril) und wurde parallel zur Monomerenmischung innerhalb von 2 h 30 min zugeführt, die Nachpolymerisation dauerte 1 h, die abdestillierte Menge Lösungsmittel betrug 100 g, der K-Wert des Ausgangspolymeren (in THF) war 39,5, die zugegebene Menge 3-Aminopropyl-trimethoxysilan betrug 9 g (50 mmol), die Reißfestigkeit betrug 2,3 N/mm$^2$ und die Reißdehnung lag bei 550%.

B9

Wie B3, jedoch mit folgenden Unterschieden: Die Polymerisationstemperatur betrug 110°C, die vorgelegte Lösung enthielt zusätzlich 10 g (1 02 mmol) Maleinsäureanhydrid, die Zusammensetzung der Monomerenmischung war 510 g Ethylacrylat, 60 g Methylmethacrylat und 20 g Styrol, die Nachpolymerisation erfolgte bei 130°C und dauerte 1 h, die abdestillierte Menge Lösungsmittel betrug 80 g, der K-Wert des Ausgangspolymeren (in THF) war 37,5, die zugegebene Menge 3-Aminopropyltrimethoxysilan betrug 18,3 g (102 mmol), die Reißfestigkeit betrug 1,08 N/mm$^2$ und die Reißdehnung lag bei 575%.

B10

Wie B3, jedoch mit folgenden unterschieden: Die Polymerisationstemperatur betrug 110°C, die vorgelegte Lösung enthielt zusätzlich 10 g (102 mmol) Maleinsäureanhydrid, die Zusammensetzung der Monomerenmischung war 410 g Ethylacrylat, 160 g Methylmethacrylat und 20 g Styrol, die Nachpolymerisation erfolgte bei 130°C und dauerte 1 h, es wurde kein Lösungsmittel abdestilliert, der K-Wert des Ausgangspolymeren (in THF) war 34, die zugegebene Menge 3-Aminopropyl-trimethoxysilan betrug 10 g (56 mmol), die Reißfestigkeit betrug 1,52 N/mm$^2$ und die Reißdehnung lag bei 358%.

B11

Wie B3, jedoch mit folgenden Unterschieden: Die Polymerisationstemperatur betrug 100°C, die Vorlage enthielt zusätzlich 20 g (204 mmol) Maleinsäureanhydrid, die Zusammensetzung der Monomerenmischung war 510 g n-Butylacrylat, 60 g Acrylnitril und 20 g Styrol, die Monomerenmischung enthielt zusätzlich 2 g Thioglycolsäureethylester, die Initiatorlösung wurde parallel zur Monomerenmischung innerhalb von 3 h zugeführt, die Nachpolymerisation erfolgte bei 100°C und dauerte 1 h, die abdestillierte Menge Lösungsmittel betrug 400 g, der K-Wert des Ausgangspolymeren (in THF) war 30,5, die zugegebene Menge 3-Aminopropyltrimethoxysilan betrug 10 g (56 mmol), die Reißfestigkeit betrug 1,32 N/mm$^2$ und die Reißdehnung lag bei 363%.

B12

Wie B3, jedoch mit folgenden Unterschieden: Die Polymerisationstemperatur betrug 100°C, die Vorlage enthielt zusätzlich 10 g (102 mmol) Maleinsäureanhydrid, die Monomerenmischung bestand nur aus 590 g Ethylacrylat und wurde innerhalb von 2 h zugegeben, die Initiatorlösung wurde parallel zur Monomerenmischung innerhalb von 2,5 h zugeführt, die Nachpolymerisation dauerte 1 h, die abdestillierte Menge Lösungsmittel betrug 120 g, der K-Wert des Ausgangspolymeren (in THF) war 28,4, als Silan I wurden 10 g (45 mmol) 3-Aminopropyl-triethoxysilan zugegeben, die Reißfestigkeit betrug 0,36 N/mm$^2$ und die Reißdehnung lag bei 347%.

B13

Wie B3, jedoch mit folgenden Unterschieden: Die Polymerisationstemperatur betrug 90°C, die Vorlage enthielt zusätzlich 30 g (306 mmol) Maleinsäureanhydrid, die Zusammensetzung der Monomerenmischung war 510 g n-Butylacrylat, 60 g Acrylnitril und 20 g Styrol, die Zufuhr der Monomerenmischung erfolgte innerhalb von 2,5 h, die Initiatorlösung enthielt 4 g Azo-bis-(isobutyronitril) und wurde parallel zur Monomerenmischung innerhalb von 3 h zugeführt, die Nachpolymerisation dauerte 1 h, es wurde kein Lösungsmittel abdestilliert, der K-Wert der Ausgangspolymeren (in THF) war 36,1, als Silan 1 wurden 12 g (54 mmol) 3-Aminopropyl-triethoxysilan gemeinsam mit 50 g hydrophobierter pyrogener Kieselsäure sowie 1 g Di-n-butyl-zinn-di-n-dodecanat zugegeben, die Reißfestigkeit betrug 1,1 $N/mm^2$ und die Reißdehnung lag bei 230%.

B14

Wie B3, jedoch mit folgenden Unterschieden: Die Polymerisationstemperatur betrug 120°C, die Vorlage bestand aus 370 g Di-n-butylphthalat, 5 g Tetraethoxysilan und 20 g (204 mmol) Maleinsäureanhydrid, die Zusammensetzung der Monomerenmischung war 710 g Ethylacrylat und 180 g Methylmethacrylat, die Zufuhr der Monomerenmischung erfolgte innerhalb von 2.5 h, die Initiatorlösung bestand aus 5 g tert.-Butylperbenzoat sowie 30 g Di-n-butylphthalat und wurde parallel zur Monomerenmischung innerhalb von 3,0 h zugeführt, die Nachpolymerisation erfolgte bei 120°C und dauerte 1 h, es wurde kein Lösungsmittel abdestilliert, der K-Wert des Ausgangspolymeren (in THF) betrug 39, als Silan I wurden 14 g (63 mmol) 3-Aminopropyl-triethoxysilan zugegeben, die Reißfestigkeit betrug 0,1 $N/mm^2$ und die Reißdehnung lag bei 83%.

B15

5% einer Monomermischung aus 225 g 2-Ethylhexylacrylat, 60 g Ethylacrylat sowie 10% einer Initiatorlösung von 8 g tert-Butylperpivalat in 45g Methylethylketon wurden mit 228g Methylethylketon und 15g (153 mmol) Maleinsäureanhydrid auf die Polymerisationstemperatur von 80°C erhitzt und anschließend innerhalb von 3 h mit dem Rest der Monomerenmischung und parallel dazu im Laufe von 3,25 h mit dem Rest der Initiatorlösung versetzt. Nach Ende der Zuläufe wurde eine Initiatorlösung aus 0,4g tert. Butylperpivalat und 30g Metylethylketon in 5 min zudosiert. Danach wurde noch 45 min bei 90°C nachpolymerisiert und anschließend Lösungsmittel im Vakuum abdestilliert. Der K-Wert (in THF) des in Lösung erhaltenen Ausgangspolymeren betrug 18,1.

B16

5% einer Monomermischung aus 225g 2-Ethylhexylacrylat, 60 g n-Butylacrylat sowie 10% einer Initiatorlösung von 8 g tert-Butylperpivalat in 55 g Methylethylketon wurden mit 219 g Methylethylketon und 15 g (153 mmol) Maleinsäureanhydrid auf die Polymerisationstemperatur von 80°C erhitzt und anschließend innerhalb von 3 h mit dem Rest der Monomerenmischung und parallel dazu im Laufe von 3,25 h mit dem Rest der Initiatorlösung versetzt. Nach Ende der Zuläufe wurde eine Initiatorlösung aus 0,4g tert. Butylperpivalat und 30g Methylethylketon in 5 min zudosiert. Danach wurde noch 45 min bei 90°C nachpolymerisiert und anschließend Lösungsmittel im Vakuum abdestilliert. Der K=Wert (in THF) des in Lösung erhaltenen Ausgangspolymeren betrug 17,3.

B17

5% einer Monomermischung aus 202 g 2-Ethylhexylacrylat, 60 g Ethylacrylat und 38g (153 mmol) Methacryloxypropyltrimethoxysilan sowie 10% einer Initiatorlösung von 8 g tert-Butylperpivalat in 53 g Methylethylketon wurden mit 217 g Methylethylketon auf die Polymerisationstemperatur von 80°C erhitzt und anschließend innerhalb von 3 h mit dem Rest der Monomerenmischung und parallel dazu im Laufe von 3,25 h mit dem Rest der Initiatorlösung versetzt. Nach Ende der Zuläufe wurde eine Initiatorlösung aus 0,4g tert. Butylperpivalat und 35g Methylethylketon in 5 min zudosiert. Danach wurde noch 45 min bei 90°C nachpolymerisiert und anschließend Lösungsmittel im Vakuum abdestilliert. Der K-Wert (in THF) des in Lösung erhaltenen Ausgangspolymeren betrug 20,0.

B18

5% einer Monomermischung aus 219g n-Butylacrylat, 60 g Ethylacrylat und 21g (214 mmol) Maleinsäureanhydrid sowie 10% einer Initiatorlösung von 6 g tert-Butylperoctoat in 70 g o-Xylol wurden mit 220 g o-Xylol auf die Polymerisationstemperatur von 140°C erhitzt und anschließend innerhalb von 3 h mit dem Rest der Monomerenmischung und parallel dazu im Laufe von 3,25 h mit dem Rest der Initiatorlösung versetzt. Nach Ende der Zuläufe wurde eine Initiatorlösung aus 0,3g tert. Butylperoctoat und 15,3g o-Xylol in 5 min zudosiert. Danach wurde noch 45 min bei 140°C nachpolymerisiert und anschließend Lösungsmittel im Vakuum abdestilliert. Der K-Wert (in THF) des in Lösung erhaltenen Ausgangspolymeren betrug 11,2.

Prüfung des Festigkeitsaufbaus der Patentbeispiele B15-B18

Beispielformulierungen V1-V10:

| | |
|---|---|
| 50,00 g | Ausgangspolymer (B15-B17) |
| 5,99 g | Dynasilan 1189 (bzw. Dynasilan AMEO, beide Silane Fa Degussa) |
| 0,50 g | Dibutylzinndilaurat (Katalysator) |
| 1,00 g | Kieselsäure 500 LS (Thixotropierungsmittel) |

In einen 150ml PE-Becher wird das Polyacrylat, das Silan und der Katalysator eingewogen. Die Mischung wird mit Hilfe eines Dissolvers homogenisiert. Nun wird das Thixotropierungsmittel eingewogen und ebenfalls mit Hilfe des Dissolvers homogenisiert.

Prüfung des Festigkeitsaufbaus der Beispielformulierungen V1-V10

Dynamische Scherfestigkeit von Parkettklebstoffen in Anlehnung an DIN EN 14293: Die Klebstoffbeispielformulierung wird mit Zahnleiste TKB B 3 auf eine Eichenmosaikparkettlamelle (160 x 23 x 8 mm) quer zur Längsseite im Bereich der zu verklebenden Fläche aufgetragen. Sofort nach dem Aufstreichen wird die Eichenmosaikparkettlamelle mit Hilfe einer Schablone so eingelegt dass eine Verklebungsfläche von 26 x 23 mm (~ 6 $cm^2$) entsteht. Dabei ist zu beachten, dass die obere Parkettlamelle symmetrisch und parallel zur Kante der unteren Parkettlamelle aufgelegt wird. Nach dem Auflegen wird die verklebte Fläche 1 Minute mit 2 kg/6 $cm^2$ belastet.

Jeweils 5 Prüfkörper werden im Normklima (NKL: bei 50% relative Luftfeuchtigkeit, 23°C) wie folgt gelagert: A: 2 Stunden, B: 4 Stunden, C: 24 Stunden, D: 7 Tage, E: 14 Tage.

Die Prüfung der dynamischen Scherfestigkeit erfolgt mit einer Prüfgeschwindigkeit von 20 mm / min mit einer Prüfmaschine Zwick Z010 (Fa. Zwick GmbH & Co. KG, Ulm).

Tabelle : Zusammensetzung der geprüften Beispielformulierungen V1-V10

| Mengen-angaben in Gramm | V1 | V2 | V3 | V4 | V5 | V6 | V7 | V8 | V9 | V10 |
|---|---|---|---|---|---|---|---|---|---|---|
| B15 | 50 | 50 | | | 50 | 50 | | | | |
| B16 | | | 50 | 50 | | | 50 | 50 | | |
| B17 | | | | | | | | | 50 | 50 |
| DBTL | 0,5 | 0,5 | 0,5 | 0,5 | | | | | 0,5 | |
| Dynasilan 1189 | 5,99 | | 5,99 | | 5,99 | | | | | |
| Dynasilan AMEO | | 5,63 | | 5,63 | | 5,63 | 5,63 | 5,63 | | |
| Kieselsäure 500 LS | 1 | 1 | 1 | 1 | 1 | 1 | 1 | 1 | 1 | 1 |

Beispielrezeptur eines Klebstoffs P1:

| | |
|---|---|
| 300,00 g | Ausgangspolymer B18 |
| 70,00 g | Palatinol N (Weichmacher) + 2 % EC N 100 (Ethylcellulose) |
| 100,00 g | Polycarb SB (Füllstoff) |
| 130,00 g | Precarb 100 (Füllstoff) |
| 18,00 g | Kieselsäure 500 LS (Thixotropierungsmittel) |
| 26,66 g | Dynasilan A 1637 (Vernetzer) |
| 22,45 g | Dynasilan 1505 (Vernetzer) |
| 4,00 g | Vinyltrimethoxysilan (Wasserfänger) |

In die Eindrückblechdose wird das Ausgangspolymer B18, der Weichmacher mit der gelösten Ethylcellulose,

das Thixotropierungsmittel und die Füllstoffe eingewogen. Die Mischung wird bei hoher Drehzahl homogenisiert, wobei die Masse in der Dose eine Temperatur von 60°C nicht überschreitet. Der Wasserfänger, der Haftvermittler und der Vernetzer werden nun hinzugegeben. Die Mischung wird typischerweise für eine Stunde unter Vakuum bei einer Temperatur von ungefähr 50°C gerührt.

Tabelle: Ergebnisse der dynamischen Scherprüfung in Anlehnung an DIN EN 14293

| Beispiel-formulierung | Lagerung | Mittelwert Scherfestigkeit in $N/mm^2$ | Beispiel-formulierung | Lagerung | Mittelwert Scherfestigkeit in $N/mm^2$ |
|---|---|---|---|---|---|
| V1 | A<br>B<br>C<br>D<br>E | 0,09<br>0,19<br>0,41<br>0,57<br>0,70 | V6 | A<br>B<br>C<br>D<br>E | 0,19<br>0,39<br>0,66<br>1,0<br>1,2 |
| V2 | A<br>B<br>C<br>D<br>E | 0,13<br>0,33<br>0,81<br>1,00<br>1,00 | V7 | A<br>B<br>C<br>D<br>E | 0,13<br>0,21<br>0,79<br>0,8<br>0,9 |
| V3 | A<br>B<br>C<br>D<br>E | 0,09<br>0,22<br>1,02<br>1,1<br>1,1 | V8 | A<br>B<br>C<br>D<br>E | 0,20<br>0,30<br>0,75<br>0,90<br>1,0 |
| V4 | A<br>B<br>C<br>D<br>E | 0,21<br>0,39<br>0,71<br>1,00<br>1,00 | V9 | A<br>B<br>C<br>D<br>E | 0,2<br>0,27<br>0,67<br>0,7<br>0,7 |
| V5 | A<br>B<br>C<br>D<br>E | 0,11<br>0,21<br>0,50<br>0,50<br>0,60 | V10 | A<br>B<br>C<br>D<br>E | 0<br>0<br>0<br>0<br>nicht vernetzt |
| P1 | A<br>B<br>C<br>D<br>E | 0,51<br>0,90<br>1,70<br>2,30<br>2,40 | | | |

Die Prüfergebnisse zeigen, dass durch die erfindungsgemäßen Beispiele V2-V4 sowie V6-V8 höhere Scherfestigkeiten als durch die Vergleichsbeispiele V9 und V10 erzielt werden (Endfestigkeiten). Zudem wird ein rascher Festigkeitsaufbau auch bei Nichtverwendung eines Katalysators durch die erfindungsgemäßen Beispiele erreicht. Durch geeignete Formulierung bzw. Variation der Polymerzusammensetzung sind noch höhere Endfestigkeiten realisierbar (P1) bei guter Verarbeitbarkeit.

## Patentansprüche

1. Klebstoff enthaltend

    (A) ein Polyacrylatharz enthaltend wenigstens ein Silicium enthaltendes Copolymer von

a) 80-99.9 Gew.-% $C_1$-$C_{20}$-Alkyl(meth)acrylaten (Monomere A) und
b) 0,1-20 Gew.-% wenigstens eines ethylenisch ungesättigten Säureanhydrids oder einer ethylenisch ungesättigten Dicarbonsäure, deren Carbonsäuregruppen eine Anhydridgruppe bilden können (Monomere B) oder 0,1-10 Gew.-% wenigstens eines wenigstens eine Isocyanatgruppe enthaltenden radikalisch copolymerisierbaren Monomers (Monomer C)
c) 0 bis 30 Gew.-% eines oder mehrerer radikalisch copolymerisierbarer ethylenisch ungesättigter Monomere (Monomere D) und
d) wenigstens eines Silans der allgemeinen Formel I, II oder III

$$NHR_4\text{-}R_1\text{-}Si(R_2)_{3\text{-}m}(R_3)_m \qquad (I)$$

$$SH\text{-}R_1\text{-}Si(R_2)_{3\text{-}m}(R_3)_m \qquad (II)$$

$$R_5\text{-}R_1\text{-}Si(R_2)_{3\text{-}m}(R_3)_m \qquad (III)$$

wobei

m die Zahl 0, 1 oder 2 bedeutet,
$R_1$ eine Kohlenwasserstoffkette mit bis zu 10 C-Atomen, die durch Sau- erstoff oder Stickstoff unterbrochen sein kann bedeutet
$R_2$ gleiche oder verschiedene hydrolysierbare Gruppen und
$R_3$ gleiche oder verschiedene $C_1$-$C_6$-Alkylgruppen bedeuten
$R_4$ einen Wasserstoffrest oder eine Kohlenwasserstoffkette mit bis zu 10 C-Atomen, die Sauerstoff oder Stickstoff enthalten kann bedeutet und
$R_5$ einen Epoxidrest

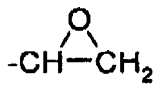

oder einen 3,4-Epoxycyclohexylrest bedeut, wobei man aus den Monomeren A bis D nach dem an sich bekannten Verfahren der radikalischen Lösungs- polymerisation ein Ausgangspolymeres herstellt und in dessen Lö- sung oder Schmelze die Silane d) einrührt-.

(B) Füllstoffe
(C) weitere übliche Hilfsstoffe sowie
(D) 0-60 Gew.-% Weichmacher,

- **dadurch gekennzeichnet, dass** der Gehalt des Polyacrylatharzes A) 30 bis 70% gew.% beträgt.

**2.** Klebstoff gemäß Anspruche 1, **dadurch gekennzeichnet, dass** der Klebstoff einen K-Wert von 1 bis 100 aufweist.

**3.** Klebstoff gemäß einem der Ansprüche 1 oder 2, **dadurch gekennzeichnet, dass** es sich bei dem Klebstoff um einen Bauklebstoff handelt.

**4.** Verwendung des Klebstoffes gemäß einem der Ansprüche 1 bis 34 als Bauklebstoff.

**5.** Verwendung des Klebstoffs gemäß einem der Ansprüche 1 bis 4 zum Verkleben von Bauteilen.

**6.** Verwendung des Klebstoffes gemäß einem der Ansprüche 1 bis 4 als Parkettklebstoff.

**7.** Verwendung des Klebstoffs gemäß einem der Ansprüche 1 bis 4 als Montagekleber.

**8.** Verfahren zur Herstellung eines Klebstoffes gemäß einem der Ansprüche 1 bis 7, **dadurch gekennzeichnet, dass** der Klebstoff in Form eines Einkomponentensystems hergestellt wird.

**9.** Verfahren zur Herstellung eines Klebstoffes gemäß einem der Ansprüche 1 bis 8, **dadurch gekennzeichnet, dass** der Klebstoff in Form eines Zweikomponentensystems hergestellt wird.

## Claims

**1.** An adhesive comprising

(A) a polyacrylate resin comprising at least one silicon-comprising copolymer of

a) 80-99.9% by weight of $C_1$-$C_{20}$-alkyl (meth)acrylates (monomers A) and
b) 0.1-20% by weight of at least one ethylenically unsaturated acid anhydride or one ethylenically unsaturated dicarboxylic acid whose carboxyl groups can form an anhydride group (monomers B) or 0.1-10% by weight of at least one monomer comprising at least one isocyanate group and capable of free radical polymerization (monomer C),
c) from 0 to 30% by weight of one or more ethylenically unsaturated monomers capable of free radical polymerization (monomers D) and
d) at least one silane of the general formula I, II or III

$$NHR_4\text{-}R_1\text{-}Si(R_2)_{3-m}(R_3)_m \qquad (I)$$

$$SH\text{-}R_1\text{-}Si(R_2)_{3-m}(R_3)_m \qquad (II)$$

$$R_5\text{-}R_1\text{-}Si(R_2)_{3-m}(R_3)_m \qquad (III)$$

where

m is the number 0, 1 or 2,
$R_1$ is a hydrocarbon chain having up to 10 carbon atoms which may be interrupted by oxygen or nitrogen
$R_2$ are identical or different hydrolyzable groups and
$R_3$ are identical or different $C_1$-$C_5$-alkyl groups,
$R_4$ is a hydrogen radical or a hydrocarbon chain having up to 10 carbon atoms which may comprise oxygen or nitrogen and
$R_5$ is an epoxide radical

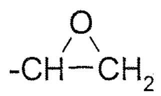

or a 3,4-epoxycyclohexyl radical, wherein a starting polymer is prepared from the monomers A to D by the free radical solution polymerization method known per se and the silanes d) are stirred into the solution or melt thereof,

(B) fillers,
(C) further conventional assistants and
(D) 0-60% by weight of plasticizers,

wherein the content of the polyacrylate resin A) is from 30 to 70% by weight.

**2.** The adhesive according to claim 1, which has a K value of from 1 to 100.

**3.** The adhesive according to either of claims 1 and 2, which is a construction adhesive.

**4.** The use of the adhesive according to any of claims 1 to 3 as a construction adhesive.

**5.** The use of the adhesive according to any of claims 1 to 4 for the adhesive bonding of components.

**6.** The use of the adhesive according to any of claims 1 to 4 as a parquet adhesive.

**7.** The use of the adhesive according to any of claims 1 to 4 as an assembly adhesive.

**8.** A method for the preparation of an adhesive according to any of claims 1 to 7, wherein the adhesive is prepared in the form of a one-component system.

**9.** A method for the preparation of an adhesive according to any of claims 1 to 8, wherein the adhesive is prepared in the form of a two-component system.

## Revendications

**1.** Adhésif contenant

(A) une résine de polyacrylate contenant au moins un copolymère contenant du silicium de

a) 80 à 99,9 % en poids de (méth) acrylates d'alkyle en $C_1$-$C_{20}$ (monomères A) et
b) 0,1 à 20 % en poids d'au moins un anhydride d'acide éthyléniquement insaturé ou d'un acide dicarboxylique éthyléniquement insaturé, dont les groupes acide carboxylique peuvent former un groupe anhydride (monomères B) ou 0,1 à 10 % en poids d'au moins un monomère copolymérisable par voie radicalaire contenant au moins un groupe isocyanate (monomère C)
c) 0 à 30 % en poids d'un ou de plusieurs monomères éthyléniquement insaturés copolymérisables par voie radicalaire (monomères D) et
d) au moins un silane de formule générale I, II ou III

$$NHR_4\text{-}R_1\text{-}Si(R_2)_{3\text{-}m}(R_3)_m \quad (I)$$

$$SH\text{-}R_1\text{-}Si(R_2)_{3\text{-}m}(R_3)_m \quad (II)$$

$$R_5\text{-}R_1\text{-}Si(R_2)_{3\text{-}m}(R_3)_m \quad (III)$$

dans lesquelles

m signifie le nombre 0, 1 ou 2,
$R_1$ signifie une chaîne hydrocarbonée contenant jusqu'à 10 atomes C, qui peut être interrompue par de l'oxygène ou de l'azote,
$R_2$ signifient des groupes hydrolysables identiques ou différents et
$R_3$ signifie des groupes alkyle en $C_1$-$C_6$ identiques ou différents,
$R_4$ signifie un radical hydrogène ou une chaîne hydrocarbonée contenant jusqu'à 10 atomes C, qui peut contenir de l'oxygène ou de l'azote, et
$R_5$ signifie un radical époxyde

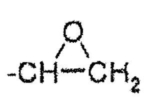

ou un radical 3,4-époxycyclohexyle, un polymère initial étant fabriqué à partir des monomères A à D par le procédé connu de polymérisation radicalaire en solution et les silanes d) étant introduits dans sa solution ou masse fondue,

(B) des charges,
(C) des adjuvants usuels supplémentaires, ainsi que
(D) 0 à 60 % en poids de plastifiants,

**caractérisé en ce que** la teneur de la résine de polyacrylate A) est de 30 à 70 % en poids.

2. Adhésif selon la revendication 1, **caractérisé en ce que** l'adhésif présente une valeur K de 1 à 100.

3. Adhésif selon l'une quelconque des revendications 1 ou 2, **caractérisé en ce que** l'adhésif est un adhésif structural.

4. Utilisation de l'adhésif selon l'une quelconque des revendications 1 à 3 en tant qu'adhésif structural.

5. Utilisation de l'adhésif selon l'une quelconque des revendications 1 à 4 pour le collage d'éléments de construction.

6. Utilisation de l'adhésif selon l'une quelconque des revendications 1 à 4 en tant qu'adhésif pour parquet.

7. Utilisation de l'adhésif selon l'une quelconque des revendications 1 à 4 en tant qu'adhésif de montage.

8. Procédé de fabrication d'un adhésif selon l'une quelconque des revendications 1 à 7, **caractérisé en ce que** l'adhésif est fabriqué sous la forme d'un système monocomposant.

9. Procédé de fabrication d'un adhésif selon l'une quelconque des revendications 1 à 8, **caractérisé en ce que** l'adhésif est fabriqué sous la forme d'un système bicomposant.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 387587 A
- EP 122457 A
- EP 199445 A
- WO 029249 A
- WO 9517443 A
- DE 3523692 A


### In der Beschreibung aufgeführte Nicht-Patentliteratur


- **T.G. Fox.** *Bull. Am. Phys. Soc. [Ser. II],* 1956, vol. 1, 123
- **J. Brandrup ; E. H. Immergut.** Polymer Handbook. J. Wiley, 1966
- POLYMER HANDBOOK. J. Wiley, 1975
- Methoden der organischen Chemie (Houben-Weyl). Georg Thieme Verlag, 1987, vol. E20, 1573-1575
- **Lückert.** Pigment- und Füllstoff-Tabellen. Vincentz Verlag, 2002